# EUROPEAN PATENT APPLICATION

(11) **EP 3 893 361 A1**
(43) Date of publication of application: **13.10.2021**
(21) Application number: 18943578.7
(22) Date of filing: 21.12.2018
(51) Int. Cl.: H02J 50/10

(54) **POWER SUPPLY DEVICE, WIRELESS CHARGING DEVICE, SYSTEM AND WIRELESS CHARGING METHOD**

(71) Applicant: GUANGDONG OPPO MOBILE TELECOMMUNICATIONS CORP., LTD., Dongguan, Guangdong 523860 (CN)
(72) Inventor: WAN, Shiming, Dongguan, Guangdong 523860 (CN); ZHANG, Jun, Dongguan, Guangdong 523860 (CN); CHEN, Shebiao, Dongguan, Guangdong 523860 (CN)
(74) Representative: Taor, Simon Edward William
(86) International application number: PCT/CN2018/122810
(87) International publication number: WO 2020/124591

(57) **Abstract**

Disclosed are a power supply device, a wireless charging device, a system and a wireless charging method. The power supply device is applicable to wireless charging, and comprises: a rectification module used to rectify an input alternating current to provide a direct current; a control module electrically connected to the rectification module; a wireless transmission driving module electrically connected to the control module to receive a first control signal sent by the control module and to generate a driving signal according to the first control signal; an inverse rectification module electrically connected to the rectification module and the wireless transmission driving module and used to generate an alternating current signal according to the driving signal and the direct current; and a connection interface electrically connected to the inverse rectification module and used to output the alternating current signal. The power supply device can effectively solve the heat dissipation problem of an apparatus being wirelessly charged.

## Description

### FIELD OF DISCLOSURE

The present disclosure relates to the field of wireless charging technologies, and in particular, to a power supply device, a wireless charging device, a system, and a wireless charging method.

### BACKGROUND

With a rapid development of wireless charging technologies, more and more devices to be charged (e.g., smart phones) support functions such as wireless charging or wireless transmission. The device to be charged can get rid of a limitation of a charging cable, thereby providing a more convenient charging method. However, an existing wireless charging technology cannot further increase a charging power due to a limitation of heat generated by the device to be charged, which limits an application experience of wireless charging.

The above information disclosed in the background portion is only used to reinforce understanding of the background of the present disclosure. Therefore, the above information may include information of the known related arts for persons of ordinary skill in the art.

### SUMMARY OF DISCLOSURE

The present disclosure provides a power supply device, a wireless charging device, a system, and a wireless charging method, which can effectively solve a heat dissipation problem of a device to be charged during wireless charging.

Other features and advantages of the present disclosure will become apparent from the following detailed description, or in part, by practice of the present disclosure.

According to one aspect of the present disclosure, a power supply device applicable to wireless charging is provided, including: a rectification module configured to rectify an input alternating current to provide a direct current; a control module electrically connected to the rectification module; a wireless transmission driving module electrically connected to the control module, and configured to receive a first control signal transmitted by the control module to generate a driving signal according to the first control signal; an inverse rectification module correspondingly electrically connected to the rectification module and the wireless transmission driving module, and configured to inversely transform the direct current according to the driving signal to generate an alternating current signal; and a connection interface electrically connected to the inverse rectification module, and configured to output the alternating current signal.

According to one embodiment of the present disclosure, the above-mentioned power supply device further includes: a switch module electrically connected to the rectification module, the control module, the inverse rectification module, and the connection interface. The switch module is configured to receive a second control signal transmitted by the control module to provide the direct current to the inverse rectification module or provide the direct current to the connection interface according to the second control signal. The connection interface is also configured to output the direct current.

According to one embodiment of the present disclosure, the control module is also configured to receive an indication signal transmitted by the wireless transmission driving module to determine whether a device connected to the connection interface is a wireless charging device according to the indication signal. If the control module determines that the device connected to the connection interface is the wireless charging device, the second control signal is transmitted to the switch module to control the switch module to provide the direct current to the inverse rectification module. If the control module determines that the device connected to the connection interface is not the wireless charging device, the second control module is transmitted to the switch module to control the switch module to provide the direct current to the connection interface.

According to one embodiment of the present disclosure, the indication signal includes a communication signal based on a Qi wireless charging standard protocol.

According to one embodiment of the present disclosure, the alternating current signal includes a modulation signal which is obtained by modulating a signal generated by inversely transforming the direct current according to the driving signal by the inverse rectification module.

According to one embodiment of the present disclosure, the control module is also configured to receive feedback information transmitted by a device to be charged wirelessly, and generate the first control signal according to the feedback information to control the wireless transmission driving module to generate the driving signal.

According to one embodiment of the present disclosure, the power supply device further includes a voltage adjustment module electrically connected to the switch module, the control module, and the inverse rectification module. The voltage adjustment module is configured to receive a third control signal transmitted by the control module, and adjust an input voltage of the inverse rectification module according to the third control signal.

According to one embodiment of the present disclosure, the control module is also configured to receive feedback information transmitted by a device to be charged wirelessly, and generate the third control signal according to the feedback information to control the voltage adjustment circuit to adjust the input voltage of the inverse rectification module.

According to one embodiment of the present disclosure, the feedback information includes a charging voltage value and/or a charging current value, a remaining capacity of the device to be charged, or a preset time for full charging detected by the device to be charged. Alternatively, the feedback information includes a voltage or current adjustment instruction determined by the device to be charged based on the detected charging voltage value and/or the charging current value, the remaining capacity, or the preset time for full charging.

According to one embodiment of the present disclosure, the feedback information is transmitted to the power supply device by the device to be charged in a wireless communication manner. Alternatively, the feedback information is transmitted to the wireless charging device through a receiving coil of the device to be charged, and is transmitted to the power supply device by the charging device.

According to one embodiment of the present disclosure, the connection interface is a female universal serial bus (USB) Type-A interface or a female USB Type-B interface.

According to one embodiment of the present disclosure, the switch module includes a load switch.

According to another aspect of the present disclosure, a wireless charging device is provided, including a charging interface, a resonant circuit, and a transmitting coil. The resonant circuit is configured to provide a resonant signal according to an alternating current signal received from the charging interface, and the transmitting coil is configured to output power according to the resonant signal to wirelessly charging a device to be charged.

According to one embodiment of the present disclosure, the transmitting coil is also configured to receive feedback information transmitted by the device to be charged. The feedback information includes a charging voltage value and/or a charging current value a charging voltage value and/or a charging current value, a remaining capacity of the device to be charged, or a preset time for full charging detected by the device to be charged. Alternatively, the feedback information includes a voltage or current adjustment instruction determined by the device to be charged based on the detected charging voltage value and/or the charging current value, the remaining capacity, or the preset time for full charging.

According to one embodiment of the present disclosure, the wireless charging device is a wireless charging base, and the device to be charged is disposed on the wireless charging base during wireless charging.

According to another aspect of the present disclosure, a wireless charging system is provided, including the power supply device according to any one of the above-mentioned power supply devices.

According to one embodiment of the present disclosure, the wireless charging system further includes any one of the above-mentioned wireless charging devices.

According to one embodiment of the present disclosure, the wireless charging system further includes a device to be charged. The device to be charged includes a receiving coil, and the receiving coil is configured to receive an alternating current signal transmitted by the wireless charging device through a transmitting coil to wirelessly charge the device to be charged.

According to one embodiment of the present disclosure, the device to be charged further includes a charging interface that matches a connection interface of the power supply device, and is configured to receive a direct current provided by the power supply device through a cable to charge the device to be charged.

According to one embodiment of the present disclosure, the alternating current signal is a modulation signal, and the terminal further includes a demodulation circuit configured to perform charging according to a charging signal demodulated from the modulation signal.

According to one embodiment of the present disclosure, the device to be charged further includes a second control module configured to communicate with a control module of the power supply device, and transmit feedback information to the power supply device. The feedback information includes a detected charging voltage value and/or a charging current value, a remaining capacity, and a preset time for full charging. Alternatively, the feedback information includes a voltage or current adjustment instruction determined by the second control module based on the detected charging voltage value and/or the charging current value, the remaining capacity, or the preset time for full charging. The alternating current signal is the modulation signal obtained by modulating according to the feedback information.

According to one embodiment of the present disclosure, the feedback information is transmitted to the wireless charging device through a receiving coil of the device to be charged, and is transmitted to the power supply device by the charging device. Alternatively, the feedback information is transmitted to the power supply device by the device to be charged in a wireless communication manner.

According to one embodiment of the present disclosure, the device to be charged further includes a wireless receiving circuit, a voltage conversion circuit, and a battery. The wireless receiving circuit is configured to convert the alternating current signal output by the wireless charging device into a direct current. The voltage conversion circuit is electrically connected to the wireless receiving circuit, and is configured to step-down the direct current output by the wireless receiving circuit. The battery is electrically connected to the voltage conversion circuit, and receives a direct current output by the voltage conversion circuit for charging. The detected charging voltage value and/or the charging current value include a detected voltage value and/or a current value of the direct current output by the wireless receiving circuit, and/or a detected voltage value and/or a current value of the direct current output by the voltage conversion circuit.

According to another aspect of the present disclosure, a wireless charging method applicable to a power supply device is provided. The power supply device includes a rectification module, a control module, a wireless transmission driving module, an inverse rectification module, and a connection interface. The methods includes: rectifying, by the rectification module, an input alternating current to provide a direct current; receiving, by the wireless transmission driving module, a first control signal transmitted by the control module; generating, by the wireless transmission driving module, a driving signal according to the first control signal; inversely transforming, by the inverse rectification module, the direct current according to the driving signal to generate an alternating current signal; and outputting, by the connection interface, the alternating current signal.

According to one embodiment of the present disclosure, the power supply device further includes a switch module. The method further includes: receiving, by the switch module, a second control signal transmitted by the control module; and providing, by the switch module, the direct current to the inverse rectification module or to the connection interface according to the second control signal, to output the direct current by the connection interface.

According to one embodiment of the present disclosure, the method further includes: receiving, by the control module, an indication signal transmitted by the wireless transmission driving module to determine whether a device connected to the connection interface is a wireless charging device according to the indication signal; transmitting the second control signal to the switch module to control the switch module to provide the direct current to the inverse rectification module if it determines that the device connected to the connection interface is the wireless charging device; transmitting the second control signal to the switch module to control the switch module to provide the direct current to the connection interface if it determines that the device connected to the connection interface is not the wireless charging device.

According to one embodiment of the present disclosure, the indication signal includes a communication signal based on a Qi wireless charging standard protocol.

According to one embodiment of the present disclosure, the method further includes: modulating, by the inverse rectification module, a signal generated by inversely transforming the direct current according to the driving signal, to obtain a modulation signal. The alternating current signal includes the modulation signal.

According to one embodiment of the present disclosure, the method further includes: receiving, by the control module, feedback information transmitted by a device to be charged wirelessly, and generating the first control signal according to the feedback information to control the wireless transmission driving module to generate the driving signal.

According to one embodiment of the present disclosure, the power supply device further includes a voltage adjustment module, and the method further includes: receiving, the voltage adjustment module, a third control signal transmitted by the control module, and adjusting an input voltage of the inverse rectification module according to the third control signal.

According to one embodiment of the present disclosure, the method further includes: receiving, by the control module, feedback information transmitted by a device to be charged wirelessly, and generating the third control signal according to the feedback information to control the voltage adjustment circuit to adjust the input voltage of the inverse rectification module.

According to one embodiment of the present disclosure, the feedback information includes a charging voltage value and/or a charging current value, a remaining capacity of the device to be charged, or a preset time for full charging detected by the device to be charged. Alternatively, the feedback information includes a voltage or current adjustment instruction determined by the device to be charged based on the detected charging voltage value and/or the charging current value, the remaining capacity, or the preset time for full charging.

According to one embodiment of the present disclosure, the feedback information is transmitted to the power supply device by the device to be charged in a wireless communication manner. Alternatively, the feedback information is transmitted to the wireless charging device through a transmitting coil of the device to be charged, and is transmitted to the power supply device by the charging device.

According to another aspect of the present disclosure, a wireless charging method applicable to a power supply device is provided, including: rectifying an input alternating current to provide a direct current; determining whether a device connected to a connection interface of the power supply device is a wireless charging device according to a received indication signal; and providing an alternating current signal by the power supply device, and transmitting the alternating current signal to the wireless charging device through the connection interface if it determines that the device connected to the connection interface is the wireless charging device. The alternating current signal is generated according to an inverse transform signal of the direct current.

According to one embodiment of the present disclosure, the method further includes: providing the direct current, by the power supply device, to the connection interface such that the connection interface outputs the direct current if it determines that the device connected to the connection interface is not the wireless charging device.

According to one embodiment of the present disclosure, the indication signal includes a communication signal based on a Qi wireless charging standard protocol.

According to one embodiment of the present disclosure, the alternating current signal is a modulation signal obtained by modulating the inverse transform signal of the direct current.

The power supply device of the present disclosure includes the wireless transmission driving module and the inverse rectification module, which can provide the wireless charging device with the charging voltage or charging current for wireless charging, so that the wireless charging device connected to it only needs to be provided with the charging interface, the resonant circuit, and the transmitting coil, and the wireless charging device can wirelessly charge the device to be charged after connecting to the power supply device through the cable. Because the modules in the wireless charging device only include the resonant circuit and the transmitting coil, the heat generation of the wireless charging device is greatly reduced, thereby reducing the heat generation of the device to be charged during wireless charging, and achieving a good heat dissipation performance.

In addition, according to some embodiments, the power supply device of the present disclosure can be implemented as a power supply device for wireless charging, and can also be implemented as a power supply device for wired charging by setting the switch module. Thus, two charging methods are provided for the device to be charged through one power supply device. Furthermore, when using the power supply device to wirelessly charge the device to be charged, the wireless charging device compatible with it only needs to be provided with the resonant circuit and the transmitting coil, which can effectively reduce the heat generated by the device to be charged during wireless charging.

It should be understood that the above general description and the following detailed description are only exemplary, and cannot limit the present disclosure.

### BRIEF DESCRIPTION OF DRAWINGS

By describing its exemplary embodiments in detail with reference to the accompanying drawings, the above and other objectives, features, and advantages of the present disclosure will become more apparent.
FIG. 1 is a block diagram showing a power supply device according to an exemplary embodiment.
FIG. 2 is a block diagram showing another power supply device according to an exemplary embodiment.
FIG. 3 is a schematic diagram showing that a rectification module and a connection interface module in the power supply device shown in FIG. 2 are connected according to an embodiment.
FIG. 4 is a block diagram showing a wireless charging device according to an exemplary embodiment.
FIG. 5 is a flowchart showing a wireless charging method according to an exemplary embodiment.
FIG. 6 is a schematic diagram showing a device to be charged according to an embodiment.
FIG. 7 is a flowchart showing another wireless charging method according to an exemplary embodiment.
FIG. 8 is a block diagram showing another power supply device according to an exemplary embodiment.

### DETAILED DESCRIPTION

The exemplary embodiments will now be described more fully with reference to the accompanying drawings. However, the exemplary embodiments can be implemented in a variety of forms and should not be construed as limited to the embodiments set forth herein. Rather, the embodiments are provided so that this disclosure will be thorough and complete and will fully convey the concepts of exemplary embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that one or more of the specific details may be practiced without practicing the technical solutions of the present disclosure, and other methods, components, devices, steps, and the like may be employed. In other instances, well-known structures, methods, devices, implementations, materials, or operations are not shown or described in detail to avoid obscuring aspects of the present disclosure.

In the description of the present disclosure, it should be understood that, orientational or positional relationships indicated by terms of "center", "longitudinal", "lateral", "length", "width", "thickness", "up", "down", "front", "back", "left", "right", "vertical", "horizontal", "top", "bottom", "within", "outside", "clockwise", "counterclockwise" and the like are orientational or positional relationships shown based on the drawings, merely to be convenient to describe the present and simplify the description, and not to express or imply that the indicated device or component must have a specific orientation, be constructed and operated in a specific orientation, thus cannot be understood to limit the present disclosure.

Furthermore, the terms such as "first" and "second" are used only for describing purpose and should not to be interpreted as the indication to the relative importance or to amount of the technical characteristics. Thus, the characteristics of the "first" and "second" are used to express or indicate to one or more features. In the description of the present disclosure, the meaning of "a plurality of' is two or more than two features, unless other specific limiting is presented.

In the present disclosure, terms such as "install", "link", "connect", "fix", etc. should be broadly understood unless other specific regulations and limitation are presented. For example, the connection can be fixedly connection, be detachably connection or as a whole; be a mechanical connection, be electrically connected; be directly connected, be indirectly connected through an intermediary, even be connection between two internal component and interrelation of two element. One of ordinary skill in this field can understand the implication of the terms in the present disclosure according to specific conditions.

In the present disclosure, unless other specific regulation and limitation is presented, the meaning of a first feature above or below a second feature can be that the first feature contacts the second feature directly, or it can also be arranged such that the first feature contacts the second feature through another feature rather than directly. Furthermore, the first feature being "over", "above", or "on the top of' the second feature includes the first feature being directly above and obliquely above the second feature, or merely indicates the horizontal height of the first feature being higher than that of the second feature. The first feature being "under", "below" or "underneath" the second feature includes the first feature being directly below and obliquely below the second feature, or merely indicates that the horizontal height of the first feature is lower than that of the second feature.

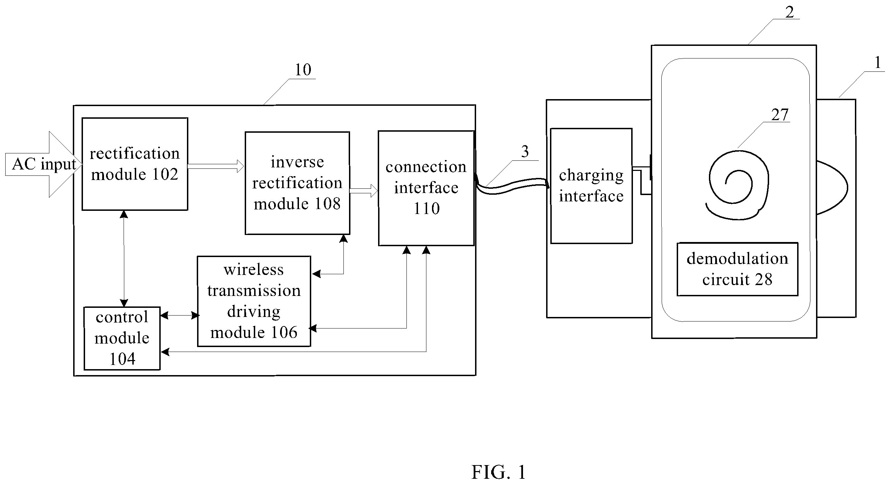

FIG. 1 is a block diagram showing a power supply device according to an exemplary embodiment. A power supply device 10 shown in FIG. 1 may be, for example, an adapter, or may also be a power bank that can provide power to a wireless charging device. Referring to FIG. 1, the power supply device 10 can be used for wireless charging. For example, the power supply device 10 and a wireless charging device 1 are electrically connected through a cable 3, and the wireless charging device 1 is provided with a charging current and a charging voltage for wireless charging through the cable 3, so that the wireless charging device 1 can perform wireless charging for a device to be charged 2. As shown in FIG. 1, the wireless charging device 1 may be a wireless charging base. The device to be charged 2 is disposed on the wireless charging device 1 during wireless charging.

The power supply device 10 includes a rectification module 102, a control module 104, a wireless transmission driving module 106, an inverse rectification module 108, and a connection interface 110.

The rectification module 102 is configured to rectify and/or filter an input alternating current to provide a stable direct current. The rectification module 102 can be implemented as an AC/DC converter, for example, which can convert the input alternating current (e.g., a 220V commercial power) into a stable low-voltage direct current suitable for requirements of the device to be charged.

The control module 104 is electrically connected to the rectification module 102 and the wireless transmission driving module 106. The control module 104 can be configured to transmit a first control signal to the wireless transmission driving module 106. The control module 104 can be implemented as a microcontroller unit (MCU), for example.

The wireless transmission driving module 106 is configured to receive the first control signal and generate a driving signal according to the first control signal. The wireless transmission driving module 106 can be implemented as an integrated circuit (IC) chip with a driving function, for example.

The inverse rectification module 108 is correspondingly electrically connected to the rectification module 102 and the wireless transmission driving module 106. The inverse rectification module 108 is configured to generate an alternating current signal according to the driving signal generated by the wireless transmission driving module 106 and the direct current provided by the rectification module 102. The inverse rectification module 108 can be implemented as an inverse rectification bridge circuit, for example.

In some embodiments, the alternating current signal is a modulation signal obtained by modulating the alternating current generated by the inverse rectification module 108 after inversely transforming the direct current provided by the rectification module 102 according to the driving signal generated by the wireless transmission driving module 106. For example, the control module 104 can generate the first control signal according to data information transmitted from the device to be charged wirelessly, such as a charging voltage value and/or a charging current value, a remaining capacity, a preset time for full charging, and other information detected by the device to be charged, thereby controlling the wireless transmission driving module 106 to generate the driving signal for driving the inverse rectification module 108 for modulation. The data information can be provided by the wireless transmission driving module 106, for example. The wireless transmission driving module 106 demodulates the signal transmitted by the device to be charged through the charging cable, and transmits the data information in a demodulated signal to the control module 104. The modulation signal may be, for example, a modulation of a voltage or current frequency of the alternating current generated after the inverse transformation of the direct current provided by the rectification module 102, or a modulation of a duty cycle of its output waveform. For example, a larger (e.g., 90%) duty cycle can achieve fast charging, and a smaller (e.g., 60%) duty cycle can achieve normal charging.

In the following, in combination with the structure of the device to be charged, how the device to be charged communicates with the control module 104 in the embodiment of the present disclosure will be described.

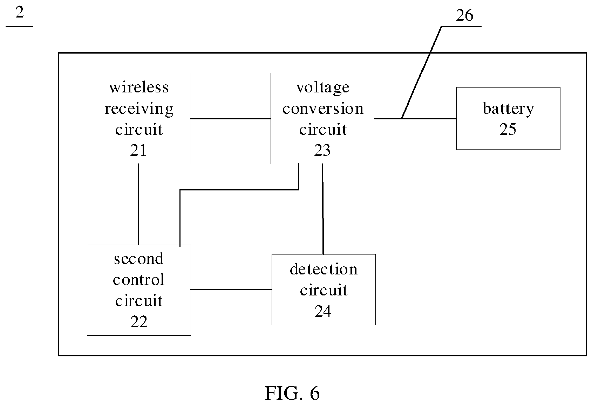

FIG. 6 is a schematic diagram showing a device to be charged according to an embodiment. As shown in FIG. 6, the device to be charged 2 includes a wireless receiving circuit 21, a second control module 22, a voltage conversion circuit 23, a battery 25, and a first charging channel 26.

The wireless receiving circuit 21 is configured to convert an electromagnetic signal transmitted by the wireless charging device into the alternating current through a receiving coil, and perform operations such as rectification and/or filtering on the alternating current to convert the alternating current into a stable direct current to charge the battery 25.

The battery 25 can include a single cell or a plurality of cells. When the battery 25 includes the plurality of cells, the plurality of cells may be connected in series. As a result, a charging voltage that battery 25 can withstand is a sum of charging voltages that plurality of cells can withstand, which can increase a charging speed and reduce a heat generation during charging.

For example, taking the device to be charged as a mobile phone as an example, when the battery 25 of the device to be charged includes a single cell, a voltage of the internal single cell is generally between 3.0V and 4.35V. When the battery 25 of the device to be charged includes two cells connected in series, a total voltage of the two cells connected in series ranges from 6.0V to 8.7V. Therefore, in comparison with the single cell, when plurality of cells connected in series is employed, an output voltage of the wireless receiving circuit 21 can be increased. When a charging speed is the same as that of a single cell, a charging current required by the plurality of cells is about 1/N of a charging current required by the single cell (N is the number of cells connected in series in the device to be charged). In other words, under the premise of ensuring the same charging speed (same charging power), using the plurality of cells solution can reduce a size of the charging current, thereby reducing the amount of heat generated by the device to be charged during a charging process. On the other hand, in comparison with the single cell solution, the solution of the plurality of cells connected in series can be configured to increase the charging voltage while maintaining the same charging current, thereby increasing the charging speed.

The first charging channel 26 may be a wire. A voltage conversion circuit 23 can be set on the first charging channel 26. The voltage conversion circuit 23 is configured to step-down the direct current output by the wireless receiving circuit 21 to obtain an output voltage and an output current of the first charging channel 26. The voltage value and the current value of the direct current output by the first charging channel 26 meet charging requirements of the battery 25 and can be directly input into the battery 25.

The second control module 22 is configured to communicate with the control circuit 104 of the power supply device 10. The second control module 22 feeds back information such as the detected charging voltage value and/or charging current value, the remaining capacity, or the preset time for full charging to the power supply device. Moreover, the second control module 22 can also transmit error information and terminate transmission information. Alternatively, the feedback information may also include a voltage or current adjustment instruction determined by the device to be charged based on the detected charging voltage value and/or the charging current value, the remaining capacity, or the preset time for full charging.

In order to detect the charging voltage value and/or the charging current value, the device to be charged 2 further includes a detection circuit 24 configured to detect the voltage value and/or the current value of the first charging channel 26. The voltage value and/or the current value of the first charging channel 26 can refer to a voltage value and/or a current value between the voltage conversion circuit 23 and the battery 25. That is, an output voltage and/or an output current of the voltage conversion circuit 23. The output voltage and/or the output current directly input to the battery 25 to charge the battery 25. The output voltage and/or the output current are fed back to the power supply device 10, which can be configured to determine its transmission power. Alternatively, the voltage value and/or the current value of the first charging channel 26 may also refer to a voltage value and/or a current value between the wireless receiving circuit 21 and the voltage conversion circuit 23. That is, an output voltage value and/or an output current value of the wireless receiving circuit 21. The output voltage and/or the output current are fed back to the power supply device 10, which can be configured to determine an input voltage of the wireless transmission driving module 106 under a certain transmission power to ensure that the current entering the receiving coil of the device to be charged 2 is within a set range, thereby further controlling a heat generation of the receiving coil.

The second control module 22 can couple the above feedback information to the receiving coil of the wireless receiving circuit 21 and transmit it to a transmitting coil of the wireless charging device. After the wireless charging device receives the feedback information from the second control circuit 22 of the device to be charged 2 through the transmitting coil, it transmits it to the control module 104 of the power supply device 10 connected to it through the cable through its charging interface.

Furthermore, the device to be charged 2 can not only couples the feedback information to the receiving coil and transmits it to the transmitting coil of the wireless charging device, but also communicates with the wireless charging device via, for example, Bluetooth, Wi-Fi®, a mobile communication network (e.g., 2G, 3G, 4G, or 5G) based on communication standards, or a 60Hz high-frequency antenna to transmit the above feedback information to the wireless charging device. The wireless charging device then transmits it through its charging interface to the control module 104 of the power supply device 10 connected to it through a cable. It is understandable that when communicating through the above-mentioned communication method, the device to be charged 2 and the wireless charging device also include corresponding communication modules. For example, a Bluetooth communication module, a Wi-Fi® communication module, a 2G/3G/4G/5G mobile communication module, or a high-frequency antenna for 60Hz.

Furthermore, the device to be charged 2 can also communicate with the power supply device 10 to transmit the above feedback information. A communication method between the device to be charged 2 and the power supply device 10 may include, for example, Bluetooth, Wi-Fi®, or a mobile communication network (e.g., 2G, 3G, 4G, or 5G) based on a communication standard. Similarly, it can be understood that, in order to achieve the above communication, both the device to be charged 2 and the power supply device 10 also include corresponding communication modules, such as a Bluetooth communication module, a Wi-Fi® communication module, or a 2G/3G/4G/5G mobile communication module, etc.

After the control module 104 of the power supply device 10 receives the above feedback information, the inverse rectification module 108 can generate a modulation signal through the wireless transmission driving module 106 to adjust a resonance frequency of a resonant circuit of the wireless charging device. Alternatively, a duty cycle of a transistor of the inverse rectification module 108 is adjusted by the wireless transmission driving module 106 to realize the adjustment of its output power. Thus, the voltage value and/or the current value of the direct current output by the first charging channel 26 is more matched with the charging voltage value and/or the current value required by the battery 25, thereby providing a faster charging speed.

The connection interface 110 of the power supply device 10 is electrically connected to the inverse rectification module 108 for outputting a charging modulation signal. The connection interface 110 is generally a female connector, for example, it can be a universal serial bus (USB) Type-A or a USB Type-B connector. One end of the cable 3 connected to the connection interface 110 may be a male USB Type-A or USB Type-B connector to be compatible with the connection interface 110.

The power supply device according to the embodiment of the present disclosure includes the wireless transmission driving module and the inverse rectification module, which can provide the wireless charging device with the charging voltage or the charging current for wireless charging. Thus, the wireless charging device connected to the power supply device only needs to be provided with the charging interface, the resonant circuit, and the transmitting coil, and can be connected to the power supply device through the cable to realize wireless charging for the device to be charged. Because the modules in the wireless charging device only are the resonant circuit and the transmitting coil, the heat generation of the wireless charging device is greatly reduced, thereby reducing the heat generation of the device to be charged during wireless charging, and achieving a good heat dissipation performance.

It should be clearly understood that the present disclosure describes how to form and use specific examples, but the principles of the present disclosure are not limited to any details of these examples. On the contrary, based on the teaching of the content disclosed in the present disclosure, these principles can be applied to many other embodiments.

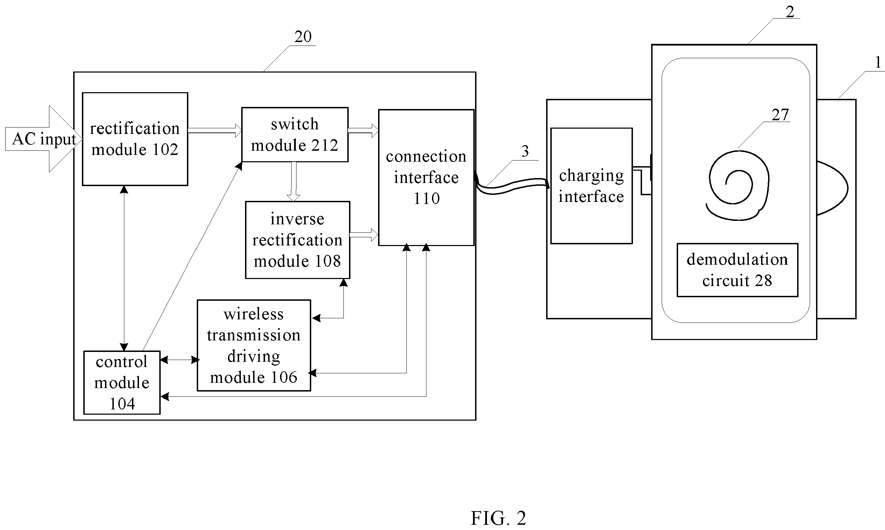

FIG. 2 is a block diagram showing another power supply device according to an exemplary embodiment. Referring to FIG. 1 and FIG. 2, a difference between the power supply device 10 in FIG. 1 and that in FIG. 2 is that the power supply device 20 in FIG. 2 further includes a switch module 212.

The switch module 212 is electrically connected to the rectification module 102, the control module 104, the inverse rectification module 108, and the connection interface 110. The switch module 212 is configured to receive a second control signal transmitted by the control module 104 to provide a direct charging signal of the rectification module 102 to the inverse rectification module 108 or provide the direct charging signal to the connection interface 110 according to the second control signal, so that the connection interface outputs the direct charging signal. The switch module 212 may be implemented as a load switch or a discrete switch, for example.

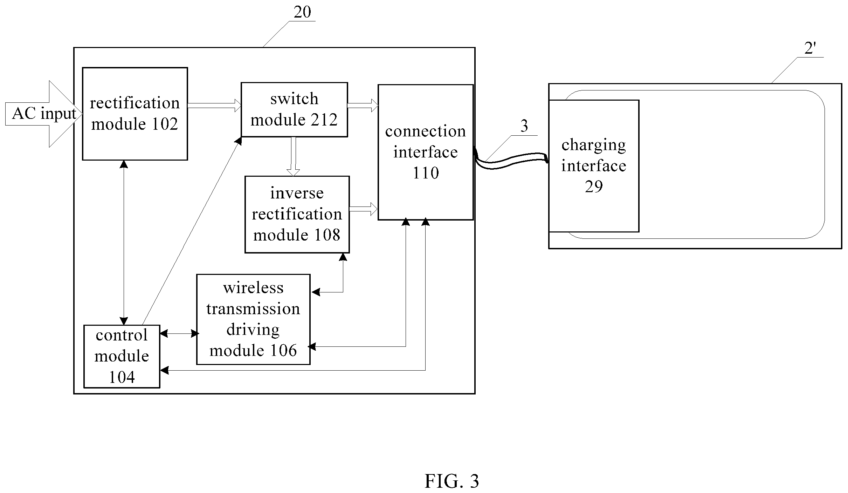

FIG. 3 is a schematic diagram showing that the rectification module and the connection interface module in the power supply device shown in FIG. 2 are connected according to an embodiment. When the switch module 212 receives the second control signal transmitted by the control module 104 to connect the rectification module 102 and the connection interface 110, the power supply device 20 can serve as a power supply device for wired charging, and is connected to a device to be charged 2' through the cable 3. At this time, a charging interface 29 of the device to be charged 2' can be a female connector of a micro USB interface, a USB Type-C interface, and a lightning interface. One end of the cable 3 connected to the charging interface 29 of the device to be charged 2' can be a male connector of a micro USB interface, a USB Type-C interface, and a lightning interface which is compatible with the charging interface 29 of the device to be charged 2'. Furthermore, the device to be charged 2' in FIG. 3 may be a device that only supports a wired charging function, or a device that also has a wireless charging function.

As shown in FIG. 2, when the switch module 212 receives the second control signal transmitted by the control module 104 to connect the rectification module 102 and the inverse rectification module 108, the power supply device 20 can serve as a power supply device for wireless charging, and is electrically connected to the wireless charging device 1 through the cable 3. At this time, the charging interface of the wireless charging device 1 can be a female connector of a micro USB interface, a USB Type-C interface, and a lightning interface. One end of the cable 3 connected to the charging interface of the wireless charging device 1 can be a male connector of a micro USB interface, a USB Type-C interface, and a lightning interface which is compatible with the charging interface of the wireless charging device 1.

In some embodiments, the control module 104 is also configured to receive an indication signal transmitted by the wireless transmission driving module 106 to determine whether a device connected to the connection interface 110 is the wireless charging device 1 according to the indication signal. The control module 104 can receive the indication signal through a data line included in the connection interface 110. The wireless transmission driving module 106 receives corresponding communication information from the device connected to the power supply device 20 through the connection interface 110, and transmits it to the control module 104 via the indication signal. The indication signal may include a communication signal based on a Qi wireless charging standard protocol. For example, it may be a communication signal defined in the Qi wireless charging standard protocol, or it may be a user-defined communication signal based on the Qi wireless charging standard protocol. Furthermore, the indication signal may also include a communication signal based on a power matters alliance (PMA) wireless charging standard, an alliance for wireless power (A4WP) wireless charging standard, an iNPOFi technology, or a Wi-Po technology, for example.

If the control module 104 detects that the indication signal includes a communication signal that meets the wireless charging standard, it determines that the device connected to the connection interface 110 is the wireless charging device 1, and the second control signal is transmitted to the switch module 212 to control the switch module 212 to provide the direct charging signal provided by the rectification module 102 to the inverse rectification module. If the control module 104 detects that the communication signal included in the indication signal is not a communication signal that meets the wireless charging standard, it is determined that the device connected to the connection interface 110 is not the wireless charging device 1, for example, the device to be charged 2' shown in FIG. 3. The second control signal is transmitted to the switch module 212 to control the switch module 212 to provide the direct charging signal provided by the rectification module 102 to the connection interface 110, so as to perform wired charging for the device connected to the connection interface 110.

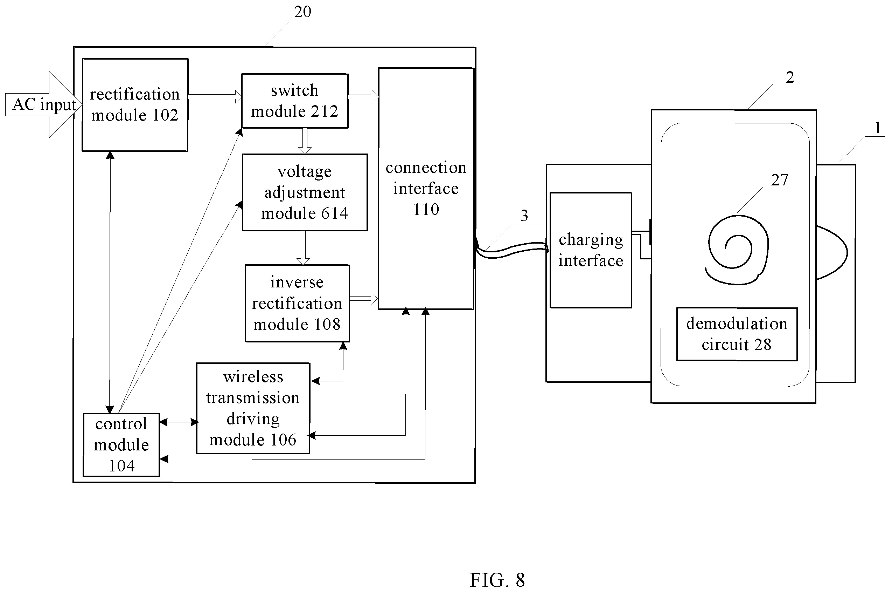

In some embodiments, as shown in FIG. 8, the power supply device 20 may also include a voltage adjustment module 614. The voltage adjustment module 614 is electrically connected to the switch module 212, the control module 104, and the inverse rectification module 108. The voltage adjustment module 614 is configured to receive a third control signal transmitted by the control module 104, and adjust an input voltage of the inverse rectification module 108 according to the third control signal. The control module 104 can generate the third control signal by receiving the feedback information of the device to be charged, thereby controlling an output voltage of the voltage adjustment module 614.

According to the embodiment of the present disclosure, the power supply device can be implemented as a power supply device for wireless charging, and can also be implemented as a power supply device for wired charging by setting the switch module. Therefore, one power supply device provides two charging methods for the device to be charged. Furthermore, when the power supply device is configured for wireless charging of the device to be charged, the wireless charging device compatible with it only needs to be provided with the resonant circuit and the transmitting coil, which can effectively reduce the heat generated by the device to be charged during wireless charging.

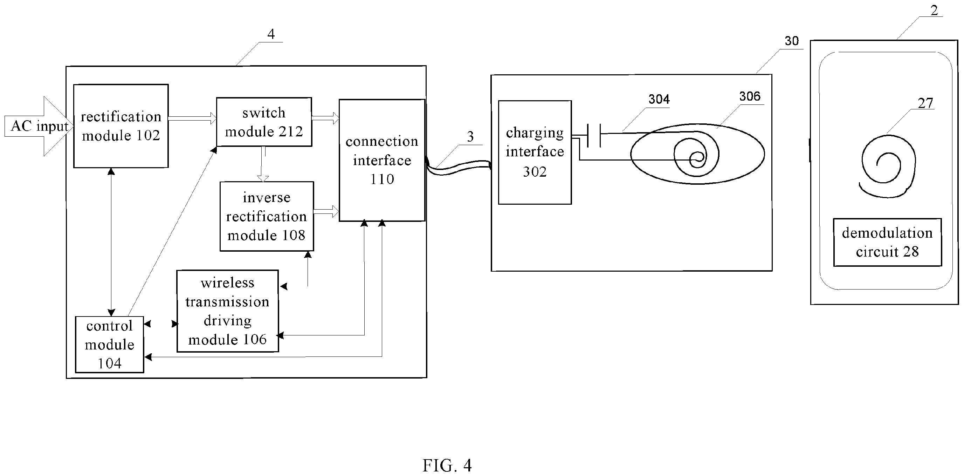

FIG. 4 is a block diagram showing a wireless charging device according to an exemplary embodiment. Referring to FIG. 4, the wireless charging device 30 includes a charging interface 302, a resonant circuit 304, and a transmitting coil 306.

The charging interface 302 is connected to a power supply device 4 through the cable 3. The charging interface 302 of the wireless charging device 30 may be a female connector of a female connector of a micro USB interface, a USB Type-C interface, and a lightning interface. One end of the cable 3 connected to the charging interface of the wireless charging device 30 can be a male connector of a micro USB interface, a USB Type-C interface, and a lightning interface which is compatible with the charging interface of the wireless charging device 30.

The resonant circuit 304 is configured to provide a resonant signal according to a charging current signal or a charging voltage signal received from the charging interface 302. The resonant circuit 304 may be, for example, an RLC series resonant circuit.

The transmitting coil 306 outputs power according to the resonant signal provided by the resonant circuit 304, thereby wirelessly charging the device to be charged 2.

In some embodiments, the wireless charging device 30 may be, for example, a wireless charging base. When the device to be charged 2 is wirelessly charged, it is disposed on the wireless charging base, so that the wireless charging can be performed by coupling the transmitting coil 306 in the wireless charging base and the receiving coil in the device to be charged 2

Furthermore, as described above, in order to achieve communication with the device to be charged 2, to receive the feedback information transmitted by the device to be charged 2, the wireless charging device 30 may also include communication modules such as a Bluetooth communication module, a Wi-Fi@ communication module, a 2G/3G/4G/5G mobile communication module, a high-frequency antenna for 60 Hz, etc.

According to the embodiment of the present disclosure, the wireless charging device only needs to be provided with the resonant circuit and the transmitting coil. Therefore, when the device to be charged is charged wirelessly by connecting the wireless charging device with the power supply device compatible with it, it can effectively solve the heat generation of the device to be charged in contact with it.

An embodiment of the present disclosure also provides a wireless charging system. Referring to FIG. 1 to FIG. 4, the wireless charging system may include the power supply device 10 or 20 that can be used for wireless charging shown in FIG. 1 to FIG. 3 or FIG. 8.

Furthermore, the wireless charging system may further include the wireless charging device 30 as shown in FIG. 4. The wireless charging device 30 may be, for example, a wireless charging base. When the device to be charged 2 is charged wirelessly, it is disposed on the wireless charging base as shown in FIG. 1 or FIG. 2.

Furthermore, the wireless charging system may also include the device to be charged 2 as shown in FIG. 1, FIG. 2, and FIG. 4. The device to be charged 2 includes the receiving coil 27 that is compatible with the wireless charging device 30, and is configured to receive the charging current signal or the charging voltage signal output by the wireless charging device through the transmitting coil, so that the device to be charged 2 is wirelessly charged. Furthermore, the device to be charged included in the wireless charging system may also be the device to be charged 2' shown in FIG. 3. The device to be charged 2' includes the charging interface 29 that matches the connection interface 110 of the power supply device 10 or 20. The charging interface 29 is configured to receive the direct charging signal provided by the power supply device through the cable, so as to perform wired charging for the device to be charged 2'.

In some embodiments, the charging current signal or the charging voltage signal output by the power supply device 10, 20, or 60 through the connection interface 110 is a modulation signal. The modulation signal is a signal obtained by modulating the inverse transform signal of the direct charging signal output by the inverse rectification module 108 according to data information fed back by the device to be charged 2. For example, it can be the modulation of a frequency of the inverse transform signal, or the modulation of a duty ratio of an output waveform. The device to be charged 2 further include the demodulation circuit 28 as shown in FIG. 1, FIG. 2, or FIG. 4, which is configured to perform the charging process according to a charging current or voltage demodulated from the modulation signal.

According to the wireless charging system of the embodiment of the present disclosure, the power supply device includes the wireless transmission driving module and the inverse rectification module, which can provide the wireless charging device with the charging voltage or charging current for wireless charging, so that the wireless charging device connected to it only needs to be provided with the charging interface, the resonant circuit, and the transmitting coil, and the wireless charging device can wirelessly charge the device to be charged after connecting to the power supply device through the cable. Because the modules in the wireless charging device only include the resonant circuit and the transmitting coil, the heat generation of the wireless charging device is greatly reduced, thereby reducing the heat generation of the device to be charged during wireless charging, and achieving a good heat dissipation performance. Furthermore, the power supply device of the wireless charging system can be implemented as a power supply device for wireless charging, and can also be implemented as a power supply device for wired charging by setting the switch module. Therefore, one power supply device provides two charging methods for the device to be charged.

The following is a method of an embodiment of the present disclosure, which can be executed by each module in the device of the embodiment of the present disclosure. For details that are not disclosed in the method of the embodiment of the present disclosure, please refer to the device of the embodiment of the present disclosure.

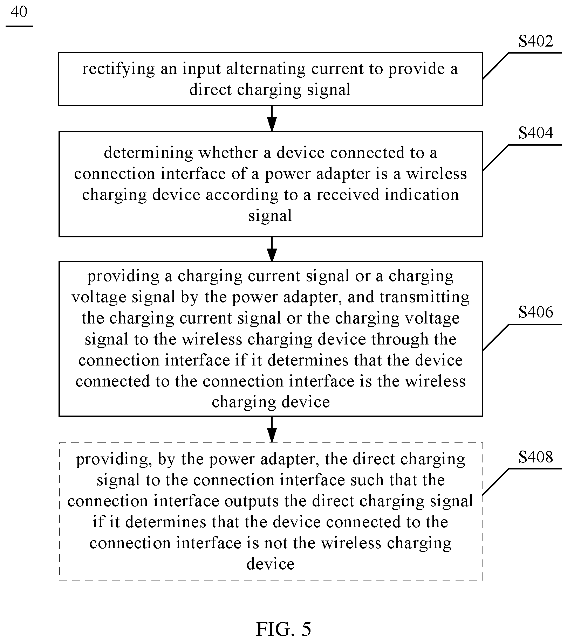

FIG. 5 is a flowchart showing a wireless charging method according to an exemplary embodiment. Referring to FIG. 5, a method 40 can be applied to the power supply device 10 or 20 shown in FIG. 1 to FIG. 3, or FIG. 8. The method 40 includes the following.

In a step S402, an input alternating current is rectified to provide a direct charging signal.

For example, the input alternating current (e.g., a 220V commercial power) is converted into a stable low-voltage direct charging signal suitable for requirements of a device to be charged. The direct charging signal may be a current signal or a voltage signal.

In a step S404, it determines that whether a device connected to a connection interface of the power supply device is a wireless charging device according to a received indication signal.

The indication signal includes communication information transmitted by the device connected to it received through the connection interface of the power supply device. Also, according to the communication information, it determines whether the device connected to the connection interface of the power supply device is the wireless charging device.

In some embodiment, the indication signal includes a communication signal based on a Qi wireless charging standard protocol. For example, it may be a communication signal defined in the Qi wireless charging standard protocol, or it may be a user-defined communication signal based on the Qi wireless charging standard protocol. Furthermore, the indication signal may also include a communication signal based on a power matters alliance (PMA) wireless charging standard, an alliance for wireless power (A4WP) wireless charging standard, an iNPOFi technology, or a Wi-Po technology, for example.

Therefore, it is possible to determine whether the device connected to the connection interface of the power supply device is the wireless charging device by detecting whether the indication signal includes a communication signal that complies with the wireless charging standard.

In a step S406, if it determines that the device connected to the connection interface is the wireless charging device, a charging current signal or a charging voltage signal is provided by the power supply device, and the charging current signal or the charging voltage signal is transmitted to the wireless charging device through the connection interface.

The charging current signal or the charging voltage signal is an alternating charging signal generated according to the inverse transform signal of the direct charging signal.

In some embodiments, the charging current signal or the charging voltage signal is a modulation signal obtained by modulating the inverse transform signal of the direct charging signal.

In some embodiments, the method 40 further includes the following.

In a step S408, if it determines that the device connected to the connection interface is not the wireless charging device, the power supply device provides the direct charging signal to the connection interface such that the connection interface outputs the direct charging signal.

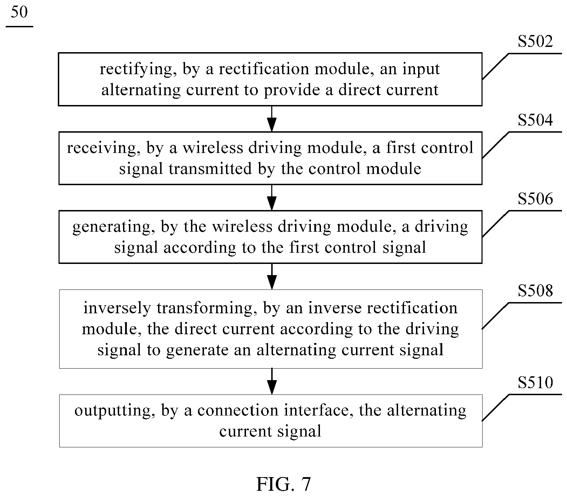

FIG. 7 is a flowchart showing another wireless charging method according to an exemplary embodiment. Referring to FIG. 7, a method 50 can be applied to the power supply device 10 or 20 shown in FIG. 1 to FIG. 3 or FIG. 8. The method 50 includes the following.

In a step S502, the rectification module rectifies an input alternating current to provide a direct current.

In a step S504, the wireless driving module receives a first control signal transmitted by the control module.

In a step S506, the wireless driving module generates a driving signal according to the first control signal.

In a step S508, the inverse rectification module inversely transforms the direct current according to the driving signal to generate an alternating current signal.

In a step S510, the connection interface outputs the alternating current signal.

In some embodiments, the method 50 further includes the following. The switch module receives the second control signal transmitted by the control module. Also, the switch module provides the direct current to the inverse rectification module, or provides the direct current to the connection interface according to the second control signal, to output the direct current through the connection interface.

In some embodiments, the method 50 further includes the following. The control module receives the indication signal transmitted by the wireless transmission driving module, and determines whether a device connected to the connection interface is the wireless charging device according to the indication signal. If it determines that the device connected to the connection interface is the wireless charging device, the second control signal is transmitted to the switch module to control the switch module to provide the direct current to the inverse rectification module. If it determines that the device connected to the connection interface is not the wireless charging device, the second control signal is transmitted to the switch module to control the switch module to provide the direct current to the connection interface.

In some embodiments, the indication signal includes a communication signal based on a Qi wireless charging standard protocol.

In some embodiments, the method 50 further includes the following. The inverse rectification module modulates a signal generated by inversely transforming the direct current according to the driving signal, to obtain a modulation signal. The alternating current signal includes the modulation signal.

In some embodiments, the method 50 further includes the following. The control module receives feedback information transmitted by a device to be charged wirelessly, and generates the first control signal according to the feedback information to control the wireless transmission driving module to generate the driving signal.

In some embodiments, the method 50 further includes the following. The voltage adjustment module receives a third control signal transmitted by the control module, and adjusts an input voltage of the inverse rectification module according to the third control signal.

In some embodiments, the method 50 further includes the following. The control module receives feedback information transmitted by a device to be charged wirelessly, and generates the third control signal according to the feedback information to control the voltage adjustment circuit to adjust the input voltage of the inverse rectification module.

In some embodiments, the feedback information includes a charging voltage value and/or a charging current value, a remaining capacity of the device to be charged, or a preset time for full charging detected by the device to be charged. Alternatively, the feedback information includes a voltage or current adjustment instruction determined by the device to be charged based on the detected charging voltage value and/or the charging current value, the remaining capacity, or the preset time for full charging.

In some embodiments, the feedback information is transmitted to the power supply device by the device to be charged in a wireless communication manner. Alternatively, the feedback information is transmitted to the wireless charging device through a transmitting coil of the device to be charged, and is transmitted to the power supply device by the charging device.

It should be noted that the above accompanying drawings are only schematic illustrations of the processing included in the method according to the exemplary embodiments of the present disclosure, and are not intended for limitation. It is easy to understand that processes shown in the above drawings does not indicate or limit a time sequence of these processes. In addition, it is easy to understand that these processes can be executed synchronously or asynchronously in multiple modules, for example.

The exemplary embodiments of the present disclosure are specifically shown and described above. It should be understood that the present disclosure is not limited to the detailed structure, arrangement, or implementation method described herein. On the contrary, the present disclosure is intended to cover various modifications and equivalent arrangements included in the spirit and scope of the appended claims.

## Claims

1. A power supply device applicable to wireless charging, **characterized in** comprising:
a rectification module configured to rectify an input alternating current to provide a direct current;
a control module electrically connected to the rectification module;
a wireless transmission driving module electrically connected to the control module, and configured to receive a first control signal transmitted by the control module to generate a driving signal according to the first control signal;
an inverse rectification module correspondingly electrically connected to the rectification module and the wireless transmission driving module, and configured to inversely transform the direct current according to the driving signal to generate an alternating current signal; and
a connection interface electrically connected to the inverse rectification module, and configured to output the alternating current signal.

2. The power supply device according to claim 1, **characterized in** further comprising: a switch module electrically connected to the rectification module, the control module, the inverse rectification module, and the connection interface, wherein the switch module is configured to receive a second control signal transmitted by the control module to provide the direct current to the inverse rectification module or provide the direct current to the connection interface according to the second control signal; and wherein the connection interface is also configured to output the direct current.

3. The power supply device according to claim 2, **characterized in that** the control module is also configured to receive an indication signal transmitted by the wireless transmission driving module to determine whether a device connected to the connection interface is a wireless charging device according to the indication signal;
if the control module determines that the device connected to the connection interface is the wireless charging device, the second control signal is transmitted to the switch module to control the switch module to provide the direct current to the inverse rectification module;
if the control module determines that the device connected to the connection interface is not the wireless charging device, the second control module is transmitted to the switch module to control the switch module to provide the direct current to the connection interface.

4. The power supply device according to claim 3, **characterized in that** the indication signal comprises a communication signal based on a Qi wireless charging standard protocol.

5. The power supply device according to claim 3, **characterized in that** the alternating current signal comprises a modulation signal which is obtained by modulating a signal generated by inversely transforming the direct current according to the driving signal by the inverse rectification module.

6. The power supply device according to claim 5, **characterized in that** the control module is also configured to receive feedback information transmitted by a device to be charged wirelessly, and generate the first control signal according to the feedback information to control the wireless transmission driving module to generate the driving signal.

7. The power supply device according to claim 3, **characterized in** further comprising: a voltage adjustment module electrically connected to the switch module, the control module, and the inverse rectification module, wherein the voltage adjustment module is configured to receive a third control signal transmitted by the control module, and adjust an input voltage of the inverse rectification module according to the third control signal.

8. The voltage supply device according to claim 7, **characterized in that** the control module is also configured to receive feedback information transmitted by a device to be charged wirelessly, and generate the third control signal according to the feedback information to control the voltage adjustment circuit to adjust the input voltage of the inverse rectification module.

9. The power supply device according to claim 6 or claim 8, **characterized in that** the feedback information comprises a charging voltage value and/or a charging current value, a remaining capacity of the device to be charged, or a preset time for full charging detected by the device to be charged; or
the feedback information comprises a voltage or current adjustment instruction determined by the device to be charged based on the detected charging voltage value and/or the charging current value, the remaining capacity, or the preset time for full charging.

10. The power supply device according to claim 9, **characterized in that** the feedback information is transmitted to the power supply device by the device to be charged in a wireless communication manner; or
the feedback information is transmitted to the wireless charging device through a receiving coil of the device to be charged, and is transmitted to the power supply device by the charging device.

11. The power supply device according to claim 2, **characterized in that** the connection interface is a female universal serial bus (USB) Type-A interface or a female USB Type-B interface.

12. The power supply device according to claim 2, **characterized in that** the switch module comprises a load switch.

13. A wireless charging device, **characterized in** comprising a charging interface, a resonant circuit, and a transmitting coil, wherein the resonant circuit is configured to provide a resonant signal according to an alternating current signal received from the charging interface, and the transmitting coil is configured to output power according to the resonant signal to wirelessly charging a device to be charged.

14. The wireless charging device according to claim 13, **characterized in that** the transmitting coil is also configured to receive feedback information transmitted by the device to be charged;
the feedback information comprises a charging voltage value and/or a charging current value a charging voltage value and/or a charging current value, a remaining capacity of the device to be charged, or a preset time for full charging detected by the device to be charged; or
the feedback information comprises a voltage or current adjustment instruction determined by the device to be charged based on the detected charging voltage value and/or the charging current value, the remaining capacity, or the preset time for full charging.

15. The wireless charging device according to claim 13 or claim 14, **characterized in that** the wireless charging device is a wireless charging base, and the device to be charged is disposed on the wireless charging base during wireless charging.

16. A wireless charging system, **characterized in** comprising the power supply device according to any one of claims 1-12.

17. The wireless charging system according to claim 16, **characterized in** further comprising the wireless charging device according to any one of claims 13-15.

18. The wireless charging system according to claim 17, **characterized in** further comprising a device to be charged, wherein the device to be charged comprises a receiving coil, and the receiving coil is configured to receive an alternating current signal transmitted by the wireless charging device through a transmitting coil to wirelessly charge the device to be charged.

19. The wireless charging system according to claim 18, **characterized in that** the device to be charged further comprises a charging interface that matches a connection interface of the power supply device, and is configured to receive a direct current provided by the power supply device through a cable to charge the device to be charged.

20. The wireless charging system according to claim 18, **characterized in that** the alternating current signal is a modulation signal, and the terminal further comprises a demodulation circuit configured to perform charging according to a charging signal demodulated from the modulation signal.

21. The wireless charging system according to claim 20, **characterized in that** the device to be charged further comprises a second control module configured to communicate with a control module of the power supply device, and transmit feedback information to the power supply device;
the feedback information comprises a detected charging voltage value and/or a charging current value, a remaining capacity, and a preset time for full charging; or the feedback information comprises a voltage or current adjustment instruction determined by the second control module based on the detected charging voltage value and/or the charging current value, the remaining capacity, or the preset time for full charging; and
the alternating current signal is the modulation signal obtained by modulating according to the feedback information.

22. The wireless charging system according to claim 21, **characterized in that** the feedback information is transmitted to the wireless charging device through a receiving coil of the device to be charged, and is transmitted to the power supply device by the charging device; or
the feedback information is transmitted to the power supply device by the device to be charged in a wireless communication manner.

23. The wireless charging system according to claim 21, **characterized in that** the device to be charged further comprises a wireless receiving circuit, a voltage conversion circuit, and a battery;
the wireless receiving circuit is configured to convert the alternating current signal output by the wireless charging device into a direct current;
the voltage conversion circuit is electrically connected to the wireless receiving circuit, and is configured to step-down the direct current output by the wireless receiving circuit;
the battery is electrically connected to the voltage conversion circuit, and receives a direct current output by the voltage conversion circuit for charging; and
the detected charging voltage value and/or the charging current value comprise a detected voltage value and/or a current value of the direct current output by the wireless receiving circuit, and/or a detected voltage value and/or a current value of the direct current output by the voltage conversion circuit.

24. A wireless charging method applicable to a power supply device, **characterized in** the power supply device comprising a rectification module, a control module, a wireless transmission driving module, an inverse rectification module, and a connection interface, and the methods comprising:
rectifying, by the rectification module, an input alternating current to provide a direct current;
receiving, by the wireless transmission driving module, a first control signal transmitted by the control module;
generating, by the wireless transmission driving module, a driving signal according to the first control signal;
inversely transforming, by the inverse rectification module, the direct current according to the driving signal to generate an alternating current signal; and
outputting, by the connection interface, the alternating current signal.

25. The method according to claim 24, **characterized in that** the power supply device further comprises a switch module, and the method further comprises:
receiving, by the switch module, a second control signal transmitted by the control module; and
providing, by the switch module, the direct current to the inverse rectification module or to the connection interface according to the second control signal, to output the direct current by the connection interface.

26. The method according to claim 25, **characterized in** further comprising: receiving, by the control module, an indication signal transmitted by the wireless transmission driving module to determine whether a device connected to the connection interface is a wireless charging device according to the indication signal;
transmitting the second control signal to the switch module to control the switch module to provide the direct current to the inverse rectification module if it determines that the device connected to the connection interface is the wireless charging device;
transmitting the second control signal to the switch module to control the switch module to provide the direct current to the connection interface if it determines that the device connected to the connection interface is not the wireless charging device.

27. The method according to claim 26, **characterized in that** the indication signal comprises a communication signal based on a Qi wireless charging standard protocol.

28. The method according to claim 26, **characterized in** further comprising modulating, by the inverse rectification module, a signal generated by inversely transforming the direct current according to the driving signal, to obtain a modulation signal, wherein the alternating current signal comprises the modulation signal.

29. The method according to claim 28, **characterized in** further comprising receiving, by the control module, feedback information transmitted by a device to be charged wirelessly, and generating the first control signal according to the feedback information to control the wireless transmission driving module to generate the driving signal.

30. The method according to claim 26, **characterized in that** the power supply device further comprises a voltage adjustment module, and the method further comprises:
receiving, the voltage adjustment module, a third control signal transmitted by the control module, and adjusting an input voltage of the inverse rectification module according to the third control signal.

31. The method according to claim 30, **characterized in** further comprising receiving, by the control module, feedback information transmitted by a device to be charged wirelessly, and generating the third control signal according to the feedback information to control the voltage adjustment circuit to adjust the input voltage of the inverse rectification module.

32. The method according to claim 29 or claim 31, **characterized in that** the feedback information comprises a charging voltage value and/or a charging current value, a remaining capacity of the device to be charged, or a preset time for full charging detected by the device to be charged; or
the feedback information comprises a voltage or current adjustment instruction determined by the device to be charged based on the detected charging voltage value and/or the charging current value, the remaining capacity, or the preset time for full charging.

33. The method according to claim 32, **characterized in that** the feedback information is transmitted to the power supply device by the device to be charged in a wireless communication manner; or
the feedback information is transmitted to the wireless charging device through a transmitting coil of the device to be charged, and is transmitted to the power supply device by the charging device.

34. A wireless charging method applicable to a power supply device, **characterized in** comprising:
rectifying an input alternating current to provide a direct current;
determining whether a device connected to a connection interface of the power supply device is a wireless charging device according to a received indication signal; and
providing an alternating current signal by the power supply device, and transmitting the alternating current signal to the wireless charging device through the connection interface if it determines that the device connected to the connection interface is the wireless charging device,
wherein the alternating current signal is generated according to an inverse transform signal of the direct current.

35. The method according to claim 34, **characterized in** further comprising:
providing the direct current, by the power supply device, to the connection interface such that the connection interface outputs the direct current if it determines that the device connected to the connection interface is not the wireless charging device.

36. The method according to claim 35, **characterized in that** the indication signal comprises a communication signal based on a Qi wireless charging standard protocol.

37. The method according to claim 34, **characterized in that** the alternating current signal is a modulation signal obtained by modulating the inverse transform signal of the direct current.
